# EUROPÄISCHE PATENTANMELDUNG

(11) **EP 4 760 582 A2**
(43) Veröffentlichungstag der Anmeldung: **17.06.2026**
(21) Anmeldenummer: 25219281.0
(22) Anmeldetag: 28.11.2025
(51) Int. Cl.: G06F 30/15, G06F 30/18, G06F 30/27, G05B 9/03, G05B 23/02, G06F 11/00, G05B 19/048, G06F 11/14

(54) **VERFAHREN ZUM BETREIBEN EINES TECHNISCHEN SYSTEMS, VERFAHREN ZUM AUSLEGEN EINER SYSTEMARCHITEKTUR UND VERFAHREN ZUM PRODUZIEREN EINES TECHNISCHEN SYSTEMS**

(30) Priorität: 11.12.2024 DE 102024137113
(71) Anmelder: Robert Bosch GmbH, 70442 Stuttgart (DE)
(72) Erfinder: Henkel, Achim, 70563 Stuttgart (DE); Kerstan, Christian, 71640 Ludwigsburg (DE); Loesch, Felix, 70197 Stuttgart (DE)

(57) **Zusammenfassung**

Die Erfindung betrifft ein Verfahren zum Betreiben eines technischen Systems, insbesondere eines Fahrzeugs, wobei das technische System durch einen Knowledge Graphen beschrieben ist, wobei, wenn ein in dem Knowledge Graph beschriebener Primärsignalweg nicht mehr zu zur Verfügung steht, ausgehend von dem Knowledge Graph ein Sekundärsignalweg ermittelt wird und das technische System unter Verwendung des Sekundärsignalweges betrieben wird. Die Erfindung betrifft außerdem ein Verfahren zum Auslegen einer Systemarchitektur eines technischen Systems und ein Verfahren zum Produzieren eines technischen Systems.

## Beschreibung

### Stand der Technik

Im Kontext technischer Systeme, insbesondere im Kontext von Fahrzeugen, ist es aus Sicherheitsgründen unerlässlich, verlässliche Informationen vorliegen zu haben. Diese verlässlichen Informationen werden insbesondere als Eingangsgrößen für sicherheitsrelevante Funktionen wie zum Beispiel ein Airbagsteuergerät benötigt. Aufgrund der hohen Sicherheitskritikalität eines Airbags, muss ein Signal, das zur Auslösung des Airbags verwendet wird, redundant vorhanden sein. Diese Redundanz wird bereits beim Design eines Fahrzeugs angelegt und kann während des Betriebs des Fahrzeugs nicht mehr geändert werden.

Knowledge Graphen sind bekannt. Ein Knowledge Graph stellt Entitäten und deren Verbindungen in Form eines graphenbasierten Modells dar, wobei die Entitäten als Knoten und die Beziehungen als Kanten repräsentiert werden. Bei den Entitäten kann es sich beispielsweise um Komponenten eines Fahrzeugs handeln.

### Offenbarung der Erfindung

Das erfindungsgemäße Verfahren zum Betreiben eines technischen Systems, insbesondere eines Fahrzeugs, wobei das technische System durch einen Knowledge Graphen beschrieben ist, hat den Vorteil, dass wenn ein in dem Knowledge Graph beschriebener Primärsignalweg nicht mehr zu zur Verfügung steht, ausgehend von dem Knowledge Graph ein Sekundärsignalweg ermittelt wird und das technische System unter Verwendung des Sekundärsignalweges betrieben wird.

Unter Signalweg soll im Folgenden sowohl ein physischer Signalweg, also z.B. eine Folge von Sender, Signalleitung und Empfänger, als auch ein logischer Signalweg verstanden werden. Ein logischer Signalweg kann sich z.B. durch ein unterschiedliches übertragenes Signal bei gleicher verwendeter Signalleitung unterscheiden.

Unter einem Primärsignalweg ist dabei insbesondere ein Signalweg zu verstehen, entlang dessen ein Primärsignal zu einem beabsichtigten Empfänger geführt wird. Ein beabsichtigter Empfänger kann insbesondere eine technische Einheit sein, die das Primärsignal empfangen soll, um ausgehend davon Berechnungen oder Ansteuerungen von Aktuatoren vorzunehmen. Ein beabsichtigter Empfänger ist insbesondere bereits während eines Designs bzw. während einer Auslegung des technischen Systems bekannt. Im Falle eines Fahrzeugs, kann es sich bei dem beabsichtigten Empfänger beispielsweise um ein Airbagsteuergerät handeln. Ein Primärsignal kann dann insbesondere ein Crash-Signal eines Crash-Sensors sein, das an das Airbagsteuergerät übertragen werden soll. In diesem Fall beginnt der Primärsignalweg beim Crash-Sensor und endet am Airbagsteuergerät.

Unter einem Sekundärsignalweg ist dabei insbesondere ein zum Primärsignalweg alternativer Signalweg zu verstehen, der ebenfalls geeignet ist, das Primärsignal oder ein Äquivalenzsignal an den beabsichtigten Empfänger zu übermitteln. Im Falle eines Fahrzeugs kann eine Eignung zum Übermitteln des Primärsignals über den Sekundärsignalweg beispielsweise bedeuten, dass das gleiche Crash-Signal, das über den Primärsignalweg an das Airbagsteuergerät übermittelt werden soll, auch an ein Steuergerät eines Gurtstraffers übermittelt wird und von dort an das Airbagsteuergerät weitergeleitet werden kann. Ein Äquivalenzsignal kann im Falle eines Fahrzeugs insbesondere ein Signal sein, dass die gleiche oder eine gleich wirkende Information wie das Primärsignal trägt. Ein Äquivalenzsignal zu dem Signal eines Crash-Sensors, kann zum Beispiel ein Signal eines Mikrophons sein, das typische Verformungsgeräusche aufzeichnet, die im Fall eines Unfalls eines Fahrzeugs durch die Verformung der Metallteile zu hören sind. Das Airbagsteuergerät könnte daher ausgehend von dem Signal des Mikrophons den Airbag auslösen, weshalb eine gleiche Wirkung vorliegt.

Bei dem Knowledge Graph handelt es sich vorzugsweise um einen Knowledge Graph, dessen Knoten Subkomponenten des technischen Systems und dessen Kanten zwischen den Knoten Beziehungen zwischen den Subkomponenten, insbesondere Kommunikationsbeziehungen zwischen den Subkomponenten, darstellen.

Besonders vorteilhafter Weise handelt es sich bei dem Knowledge Graphen um eine Ontologie, die das technische System, insbesondere das Fahrzeug, beschreibt.

Besonders vorteilhaft ist es, wenn der Sekundärsignalweg anhand einer Wichtung aus einer Vielzahl möglicher Signalwege ermittelt wird. Hierzu werden vorteilhafterweise mehrere mögliche, besonders bevorzugt alle möglichen, Signalwege ermittelt. Jedem ermittelten Signalweg wird vorteilhafterweise eine Wichtung zugeordnet, die beispielsweise eine Signalqualität ausdrücken kann. Im Falle eines Fahrzeugs wäre das Signal des Mikrophones in Bezug auf die Auslösung des Airbags z.B. als aussagekräftiger einzustufen, als ein Signal, das eine Fehlfunktion eines Scheinwerfers repräsentiert, auch wenn ein defekter Scheinwerfer ebenfalls ein Indikator für einen Unfall des Fahrzeugs sein kann. Besonders vorteilhafterweise umfasst die Wichtung daher einen Qualitätswert, der angibt, wie verlässlich der ermittelte Signalweg ist. Besonders vorteilhafterweise umfasst die Wichtung alternativ oder zusätzlich einen Spezifizitätswert, der quantifiziert, wie spezifisch ein Signalweg in Bezug auf den beabsichtigten Empfänger ist.

Besonders vorteilhaft ist, wenn die Wichtung eine technische Wichtung und eine Autorisierungswichtung umfasst. Die technische Wichtung kann insbesondere den Qualitätswert und/oder den Spezifitätswert umfassen. Die Autorisierungswichtung kann insbesondere Ausdrücken, ob ein beabsichtigter Empfänger zur Verwendung des möglichen Signalwegs autorisiert ist. Im Falle eines Fahrzeugs kann somit beispielsweise ein Signal in einer höhen Auflösung einem autorisierten Steuergerät vorbehalten bleiben. Die Autorisierung des Steuergeräts kann dabei einer Zahlung des Fahrzeugherstellers an einen Sensorhersteller verknüpft sein. Somit ermöglicht diese Ausgestaltung des erfindungsgemäßen Verfahrens neue Geschäftsmodelle zwischen Zulieferer und Hersteller des technischen Systems.

Vorteilhafterweise handelt es sich bei der Wichtung, der technischen Wichtung, dem Qualitätswert, dem Spezifitätswert und der Autorisierungswichtung um numerische Werte, die vorteilhafterweise miteinander verrechnet und leicht miteinander verglichen werden können.

Besonders vorteilhaft ist, wenn der Knowledge Graph eine Auslegung des technischen Systems, eine Herstellung des technischen Systems und einen Gebrauch des technischen Systems repräsentiert. Mit anderen Worten repräsentiert der Knowledge Graph in diesem Fall die Subkomponenten des technischen Systems und deren Beziehung untereinander, wie sie sich aus einer Spezifikation des technischen Systems ergeben. Zusätzlich repräsentiert der Knowledge Graph tatsächlich verbaute Subkomponenten und deren Beziehungen untereinander. Zusätzlich repräsentiert der Knowledge Graph den tatsächlich vorliegenden Zustand, insbesondere einen Verschleißzustand, der Subsysteme und deren Beziehungen untereinander.

In besonders vorteilhafter Ausgestaltung handelt es sich bei dem Knowledge Graphen um einen Digital Twin, insbesondere dann, wenn der Knowledge Graph auch den tatsächlich vorliegenden Zustand der Subsysteme repräsentiert.

Vorteilhafterweise kann das erfindungsgemäße Verfahren auch verwendet werden, um auf einen Teilausfall des technischen Systems, insbesondere des Fahrzeugs, zu reagieren. Hierbei wird zunächst festgestellt, dass der Primärsignalweg unterbrochen ist, sodass das Primärsignal dem Empfänger nicht mehr zur Verfügung steht. Falls der Sekundärsignalpfad bereit bekannt ist, kann anschließend auf den Sekundärsignalpfad gewechselt werden. Falls der Sekundärsignalpfad noch nicht bekannt ist, kann ausgehend von dem Knowledge Graphen der Sekundärsignalpfad gesucht werden. Hierfür werden alle möglichen Signalpfade analysiert und deren Wichtung verglichen. Hierdurch ergibt sich eine Priorisierung der Signalpfade. Anschließend wird derjenige Signalpfad als Sekundärsignalpfad verwendet, dessen Wichtung am größten ist.

Besonders vorteilhaft ist, wenn die Reaktion auf den Teilausfall des technischen Systems mittels eines Digital Twins, der in einem Backend liegt, vorgenommen wird. Bei dem Digital Twin handelt es sich vorteilhafterweise um den Knowledge Graphen, der auch den tatsächlich vorliegenden Zustand der Subsysteme des technischen Systems repräsentiert. Besonders vorteilhafterweise kann so auf einen Teilausfall eines Fahrzeugs reagiert werden, beispielsweise indem ausgehend von dem vorgestellten Ausführungsbeispiel ein Signal eines defekten Sensors ersetzt wird. Alternativ eignet sich das vorgestellte Ausführungsbeispiel des erfindungsgemäßen Verfahrens auch, um analog auf einen Teilausfall einer Produktionsanlage zu reagieren. Besonders vorteilhaft kann so auf den Teilausfall eines dynamisch rekonfigurier baren technischen Systems, insbesondere eines Fahrzeugs mit softwaredefinierten Signalpfaden, reagiert werden.

Vorteilhaft ist ein Verfahren zum Auslegen einer Systemarchitektur eines technischen Systems, insbesondere einer Fahrzeugarchitektur, wobei Signalwege ausgehend von dem Knowledge Graphen des technischen Systems definiert werden. Hierbei kann das technische System insbesondere iterativ so ausgelegt werden, dass das technische System einem vorgebbaren Verlässlichkeitskriterium entspricht. Beispielsweise kann unter Verwendung der Detailaspekte der oben genannten Ausführungsbeispiele überprüft werden, ob eine derzeitige Auslegung des technischen Systems über ein ausreichendes Maß an Redundanz verfügt. Ist dies nicht der Fall, kann nach weiteren redundanten Signalwegen gesucht werden. Werden keine alternativen Signalwege gefunden, kann die derzeitige Auslegung der Systemarchitektur überarbeitet werden, beispielsweise indem neue Sensoren und/oder Signalwege ergänzt und so eine aktualisierte Auslegung erhalten wird. Anschließens kann die aktualisierte Auslegung erneut anhand der oben beschriebenen Verfahren überprüft werden.

Vorteilhaft ist daher, dass die Signalwege redundant und/oder alternativ definiert werden.

Vorteilhaft ist auch ein Verfahren zum Produzieren eines technischen Systems, insbesondere eines Fahrzeugs, wobei das technische System gemäß einer Auslegung, die mittels des vorgestellten Verfahrens ermittelt wurde, produziert wird.

Vorteilhaft ist auch ein technisches System, insbesondere ein Fahrzeug, das gemäß dem oben genannten Verfahren produziert wurde.

Nachfolgend wird ein Ausführungsbeispiel der vorliegenden Erfindung anhand der beiliegenden Zeichnung näher erläutert. Dabei zeigt:

### Kurze Beschreibung der Zeichnung

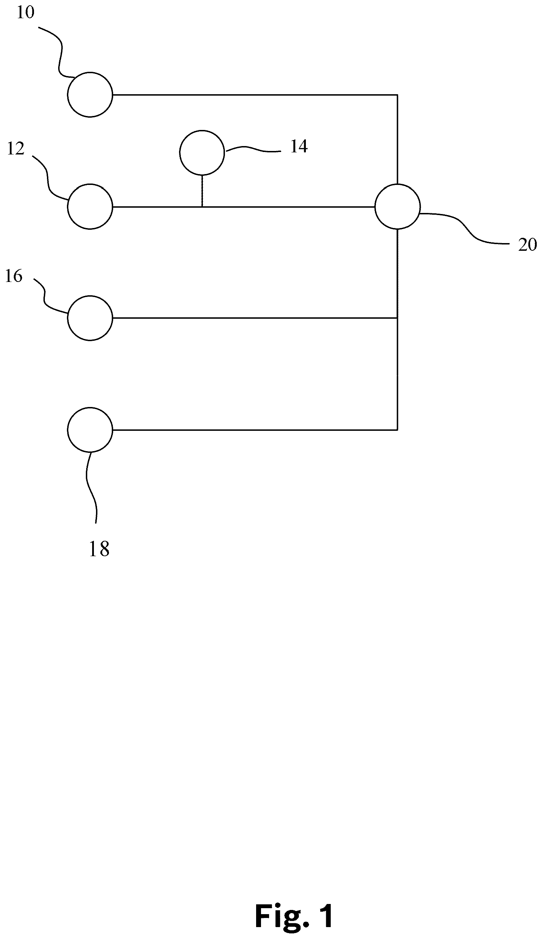

- Fig. 1: eine schematische Darstellung eines Knowledge Graphen eines Fahrzeugs mit redundanten Signalpfaden;

Figur 1 zeigt eine schematische Darstellung eines Knowledge Graphen eines Fahrzeugs mit redundanten Signalpfaden. Insgesamt drei verschiedene redundante bzw. alternative Signalpfade führen zum Objekt "Fahrzeuggeschwindigkeit" (20). Der erste beginnt beim Objekt "GPS Geschwindigkeit" (10), der zweite beginnt beim Objekt "Radgeschwindigkeit" (12) und ist mit dem Objekt "Reifengröße" (14) verknüpft. Der dritte beginnt beim Objekt "Motordrehzahl" (16), wobei eine Verknüpfung mit dem Objekt "Getriebe Übersetzung" (18) vorliegt. Figur 3 zeigt also drei Möglichkeiten auf, per Analyse des Knowledge Graphen logische Signalpfade für die Ermittlung einer Fahrzeuggeschwindigkeit zu bestimmen.

## Patentansprüche

1. Verfahren zum Betreiben eines technischen Systems, insbesondere eines Fahrzeugs, wobei das technische System durch einen Knowledge Graphen beschrieben ist, **dadurch gekennzeichnet, dass**, wenn ein in dem Knowledge Graph beschriebener Primärsignalweg nicht mehr zu zur Verfügung steht, ausgehend von dem Knowledge Graph ein Sekundärsignalweg ermittelt wird und das technische System unter Verwendung des Sekundärsignalweges betrieben wird.

2. Verfahren nach Anspruch 1, **dadurch gekennzeichnet, dass** der Sekundärsignalweg anhand einer Wichtung aus einer Vielzahl möglicher Signalwege ermittelt wird.

3. Verfahren nach Anspruch 2, **dadurch gekennzeichnet, dass** die Wichtung eine technische Wichtung und eine Autorisierungswichtung umfasst.

4. Verfahren nach einem der Ansprüche 1 bis 3, **dadurch gekennzeichnet, dass** der Knowledge Graph, eine Auslegung des technischen Systems, eine Produktion des technischen Systems und einen Gebrauch des technischen Systems repräsentiert.

5. Verfahren zum Auslegen einer Systemarchitektur eines technischen Systems, insbesondere einer Fahrzeugarchitektur, **dadurch gekennzeichnet, dass** Signalwege ausgehend von dem Knowledge Graphen des technischen Systems definiert werden.

6. Verfahren nach Anspruch 5, **dadurch gekennzeichnet, dass** die Signalwege redundant und/oder alternativ definiert werden.

7. Verfahren zum Produzieren eines technischen Systems, insbesondere eines Fahrzeugs, **dadurch gekennzeichnet, dass** das technische System gemäß einer Auslegung, die mittels des Verfahrens nach einem der Ansprüche 5 oder 6 ermittelt wurde, produziert wird.

8. Technisches System, insbesondere Fahrzeug, das nach dem Verfahren nach Anspruch 7 produziert wurde.
